# EUROPÄISCHE PATENTSCHRIFT

(11) **EP 1 578 557 B1**
(45) Veröffentlichungstag und Bekanntmachung des Hinweises auf die Patenterteilung: **30.08.2006**
(21) Anmeldenummer: 03779682.8
(22) Anmeldetag: 29.10.2003
(51) Int. Cl.: B23K 26/38, B23K 26/03, B60R 21/20

(54) **VERFAHREN ZUM ERZEUGEN EINER INTEGRIERTEN SOLLBRUCHLINIE IN EIN FL CHENHAFTES GEBILDE**
METHOD FOR THE INTRODUCTION OF AN INTEGRATED PREDETERMINED RUPTURE LINE IN A PLANAR EXPANSIVE BODY
PROCEDE DE PRODUCTION D'UNE LIGNE DE RUPTURE INTEGREE DANS UNE STRUCTURE PLANE

(30) Priorität: 19.11.2002 DE 10254377
(43) Veröffentlichungstag der Anmeldung: 28.09.2005
(73) Patentinhaber: JENOPTIK Automatisierungstechnik GmbH, 07745 Jena (DE)
(72) Erfinder: GRIEBEL, Martin, 07743 Jena (DE); LUTZE, Walter, 07751 Jena-Drackendorf (DE); STEINHÄUSER, Frank, 99441 Magdala (DE); PREUSS, Norbert, 07743 Jena (DE)
(74) Vertreter: Schaller, Renate
(86) Internationale Anmeldenummer: PCT/DE2003/003637
(87) Internationale Veröffentlichungsnummer: WO 2004/045799

(56) Entgegenhaltungen:
- EP-A- 0 711 627
- EP-A- 1 010 591
- DE-A- 10 128 745
- DE-A- 19 947 585
- DE-C- 19 636 429
- US-A- 5 632 914
- US-A- 5 676 394
- US-A- 5 883 356

## Beschreibung

Die Erfindung betrifft ein Verfahren zum Einbringen einer integrierten Sollbruchlinie in ein flächenhaft ausgedehntes Gebilde. Das Verfahren ist insbesondere geeignet, eine unsichtbare Sollbruchlinie mit einem reproduzierbaren definierten Aufreißwiderstand mittels Laser in ein inhomogenes Material, wie ein Gewebe, einzubringen. Ein gattungsgleiches Verfahren ist in der DE 196 36 429 C1, die als nächsliegender Stand der Technik angesehen wirt, beschrieben.

Es ist heute auf vielen Anwendungsgebieten üblich, integrierte Sollbruchlinien in flächenhaft ausgedehnte Gebilde einzubringen, um diese im Bedarfsfall entlang dieser Sollbruchlinie zu öffnen. Als Beispiel seien genannt Aufreiß- und Trennhilfen in Verpackungsmitteln und Büromaterial, Sollbruchstellen in Gerätegehäusen, um z.B. das Gehäuse für verschiedene Geräteausführungen einsetzen zu können oder auch Sollbruchlinien in Airbag-Abdeckungen, die im Fall der Aktivierung des Airbags dessen ungehinderten Durchtritt ermöglichen.

Eine Besonderheit besteht vor allem auf Grund des damit verbundenen hohen Sicherheitsrisikos in der Herstellung von Sollbruchlinien in Airbagabdeckungen. Da das erfindungsgemäße Verfahren insbesondere geeignet ist, eine Sollbruchlinie mit den speziellen Anforderungen herzustellen, die sich für eine Airbag-Abdeckung ergeben, soll es anhand der Bearbeitung einer Airbag-Abdeckung erläutert werden, soll jedoch darauf nicht beschränkt sein. Auch stellt sich der Stand der Technik so dar, dass Verfahren zum Einbringen einer Sollbruchlinie definierter und reproduzierbarer Aufreißkraft, wie sie auch mit dem erfindungsgemäßen Verfahren entsteht, fast ausschließlich an Airbag-Abdeckungen beschrieben werden.

Es sind eine Vielzahl von Verfahren bekannt, mit denen eine Sollbruchlinie in eine Airbagabdeckung eingebracht werden kann. Anfänglich kamen als Airbagabdeckung nur die Armaturentafel bzw. die Lenkradnabe zur Abdeckung eines Frontairbags in Frage. Inzwischen ist es Standard, dass auch Türverkleidungen und Sitzpolsterungen einen Seitenairbag, der Fahrzeughimmel einen Kopfairbag oder sogar der Sicherheitsgurt einen Frontairbag, z.B. für die Mitfahrer auf den Rücksitzen, verbergen.
Damit erhöht sich nicht nur die konstruktive Vielfalt der Airbagabdeckungen, sondern auch die Vielfalt der hierfür verwendeten Materialien, aus denen die Airbag-Abdeckung ein- oder mehrschichtig hergestellt wird. Konventionelle Airbagabdeckungen in der Armaturentafel bestehen in der Regel aus einer steifen Trägerschicht, einer weichen Schaumstoffschicht und einer dem Fahrgastraum zugewandten Dekorschicht. Sie kann aber auch nur aus einer festen Trägerschicht bestehen, die von einer Dekorschicht überzogen ist oder auch nur aus einer Trägerschicht, deren Oberfläche dekorativ gestaltet ist. Als Dekorschicht kommen insbesondere Kunststofffolien zur Anwendung. Sie haben eine weitestgehend homogene Materialdichteverteilung über die Schichtdicke und entlang der gewünschten Sollbruchlinie. Als bevorzugtes Verfahren zum Einbringen einer solchen Sollbruchlinie in Airbagabdeckungen, bestehend aus den beschriebenen Materialien, ist das Laserschneiden bekannt. Für das Einbringen einer Sollbruchlinie in Airbag-Abdeckungen mit einer textilen oder anderen Dekorschicht mit einer inhomogenen Materialdichteverteilung ist aus dem Stand der Technik kein Verfahren mittels Laser bekannt.

Entsprechend der Aufgabe der vorliegenden Erfindung sind alle die Verfahren zum Stand der Technik zuzuordnen, bei denen eine Sollbruchlinie entweder durch Laser in ein flächenhaftes Gebilde eingebracht wird, oder das flächenhafte Gebilde, in das eine Sollbruchlinie eingebracht werden soll, aus einem Material mit einer inhomogenen Materialdichtverteilung wie ein Gewebe besteht.

Auch wenn nicht in allen nachfolgend gewürdigten Veröffentlichungen ausdrücklich erwähnt, muss doch in jedem Fall eine Sollbruchlinie mit einer definierten Aufreißkraft erzeugt werden, die seitens des Fahrgastraumes (Dekorseite der Airbag-Abdeckung) aus ästhetischen Gründen unsichtbar sein soll. Alle hierzu beschriebenen Laserverfahren des Standes der Technik haben gemeinsam, dass eine Laserstrahlung auf die Rückseite einer vorgefertigten Schicht (z.B. Träger- oder Dekorschicht) bzw. der kompletten Airbag-Abdeckung, die aus einer oder mehreren Schichten bestehen kann, gerichtet wird und die Laserstrahlung relativ zu dieser Rückseite bewegt wird, damit die Laserstrahlung auf der Rückseite eine Linie entlang der gewünschten Sollbruchlinie beschreibt. Die Parameter, wie Art der Laserstrahlung und deren Wellenlänge, Laserleistung, Relativgeschwindigkeit, Pulsdauer und Pulsfrequenz sowie eine eventuelle Reglung dieser Parameter unterscheiden sich für die aus dem Stand der Technik bekannten Verfahren.

In der US 5,883,356 wird ein Verfahren beschrieben, bei dem die Dicke eines Werkstückes, insbesondere einer Armaturentafel, deren Materialaufbau nicht näher ausgeführt ist, entlang einer einzubringenden Sollbruchlinie vermessen wird. Diese Dickenmesswerte werden Ortsdaten zugeordnet abgespeichert und dienen anschließend der ortsabhängigen Ansteuerung des Lasers, um eine konstante und damit definierte Restwandstärke über die Sollbruchlinie zu erzielen.
Voraussetzung, um tatsächlich eine konstante Restwandstärke über die Sollbruchlinie zu erhalten, bei einer Ansteuerung der Laserparameter abhängig von der Materialdicke, ist die Homogenität des Materials entlang der Sollbruchlinie, was regelmäßig für Kunststoffe gegeben ist.

Aus der EP 711 627 B1 ist ein Verfahren zur Erzeugung einer Sollbruchlinie in einem einschichtigen flächenhaften Gebilde mit einer Bearbeitungsseite und einer Dekorseite bekannt, dass laut Beschreibung auch ein Textilgewebe und damit ein inhomogenes Material sein kann. Der Grundgedanke der hier beschriebenen technischen Lösung besteht darin, die Abtragstiefe oder Restwandstärke des Materials mit einem Sensor zu erfassen und das Sensorsignal als Steuersignal für den Laser zu verwenden, um eine Sollbruchlinie definierter Restwandstärke herzustellen. Eine Linie definierter Restwandstärke in textiles Material zu erzeugen ist allerdings aufgrund der inhomogenen Materialdichteverteilung überhaupt nicht möglich. Hingegen könnte eine Linie mit einer maximalen Restwandstärke erzeugt werden. Die zu erfassen ist jedoch mit den hier angebotenen Sensorprinzipien nicht möglich.

Die DE 196 36 429 C1 (Prioritätsanmeldung zu US 5,882,572) offenbart ein Verfahren, bei dem mittels steuerbarer gepulster Laserstrahlung eine Reihe von Sacklöchern mit einer bestimmten Restwandstärke in ein Flachmaterial erzeugt wird. Zu diesem Zweck wird die Laserstrahlung so lange auf die Oberfläche des Flachmaterials gerichtet, bis im Auftreffpunkt die Restwandstärke durch Lasermaterialabtrag soweit reduziert ist, dass die durch die Restwand transmittierende Strahlung von einem Detektor detektiert wird und der Laser bei Überschreiten eines vorgegebenen Schwellwertes des Detektors abrupt abgeschaltet wird. Der Detektor ist entsprechend dem vorgegebenen Schwellwert in seiner Empfindlichkeit eingestellt. Eine Beaufschlagung mit der gesamten Laserstrahlung würde ihn übersteuern und ihn zumindest für die folgende Detektion außer Funktion setzen.

In der DE 101 28 745 A1 wird u.a. vorgeschlagen, das in der DE 196 36 429 C1 beschriebene Verfahren in Verbindung mit der Erzeugung von Perforationslöchern langgestreckter Schlitzgeometrie in Verkleidungsteile anzuwenden. Als Verkleidungsteile werden beispielhaft Instrumententafeln, Sitzbezüge, Sitzverkleidungen, Säulenverkleidungen und Dachhimmel genannt.

Die Anmelderin der vorliegenden Erfindung und Patentinhaberin des DE 196 36 429 C1 hat jedoch erkannt, dass für die Bearbeitung inhomogener Materialien, wie einem Gewebe, bei denen bereits ein erster Laserpuls zwischen der Fadenstruktur hindurch mit voller Leistung auf den Detektor treffen könnte, dieses Verfahren ungeeignet ist, um eine Reihe von Sacklöchern zu erzeugen.

In der US 5,632,914 soll eine Sollbruchlinie in eine Dekorschicht, die hier ausdrücklich als eine elastische Plastikhaut bezeichnet wird, eingebracht werden. Dies geschieht mittels Laser durch das Herstellen einer Reihe von Mikroperforationen, die für das menschliche Auge nicht sichtbar sind. Nicht ausdrücklich erwähnt, jedoch zwingend für das Erzeugen von Mikroperforationen, ist · das sofortige Abschalten der Laserstrahlung bei Materialdurchbruch, um den Durchmesser minimal zu halten. Für viele Materialien wird der Materialdurchbruch jedoch nicht deshalb sichtbar, weil der Lochdurchmesser wahrnehmbar wird, sondern vielmehr durch Oberflächenaufwerfungen oder Farbveränderungen in Folgen der entstehenden Materialschmelze.

Die aufgezeigten Lösungen, die sich durch weitere derartige Lösungen ergänzen lassen, haben das gemeinsame Ziel, eine Sollbruchlinie einzubringen mit einem reproduzierbaren über ihre Länge definierten Aufreißwiderstand.
Der Aufreißwiderstand sollte einerseits gering sein, damit die Sollbruchlinie im Falle der Aktivierung des Airbags mit einer nur geringen Aufreißkraft zerstört werden kann, andererseits darf die Sollbruchlinie nicht bereits bei einer unkontrollierten zufälligen Krafteinwirkung seitens des Fahrgastraumes brechen.

Um einen definierten Aufreißwiderstand über die Länge der Sollbruchlinie zu erzielen, wird das Material prinzipiell entweder bei konstanter Dicke gleichmäßig geschwächt (Abtrag einer definierten Tiefe) oder bei schwankender Dicke bis auf eine definierte Restwandstärke abgetragen. Sowohl ein definierter Tiefenabtrag bei konstanter Dicke als auch der Abtrag auf eine definierte Restwandstärke können nur dann mit einem definierten Aufreißwiderstand korrelieren, wenn das Material homogen ist, d.h. über eine gleiche Restwandstärke eine jeweils eine gleiche Materialmenge vorhanden ist, durch die die Strahlung transmittiert.

Sämtliche aufgezeigte Verfahren sind nicht geeignet, um eine Dekorschicht aus einem inhomogenen Material, wie ein Gewebe oder eine Airbagabdeckung mit einer solchen Dekorschicht zu bearbeiten. Ein Gewebe wird grundsätzlich von einer Vielzahl von in einer Richtung (Längsrichtung) verlaufenden Fäden (Längsfäden) und einer Vielzahl von in einer dazu senkrechten Richtung (Querrichtung) verlaufenden Fäden (Querfäden), die miteinander verwebt sind, gebildet. Auch nicht gewebte Flächengebilde, die jedoch eine solche Gewebestruktur aufweisen, sollen im Sinne dieser Erfindung als Gewebe verstanden werden. Schneidet man das Gewebe neben einem Querfaden quer durch, so zeigt das Schnittbild zwei Reihen von Faden-Querschnitten, die übereinander hälftig zueinander versetzt angeordnet sind. An diesem Bild wird sofort klar, dass ein definierter Tiefenschnitt bei bestimmten Lagen der Sollbruchlinie zur Gewebestruktur dazu führen kann, dass entweder nur die Fäden der unteren Reihe und damit jeder zweite Faden geschwächt wird oder aber diese völlig durchtrennt werden, was kurzfristig zur Auflösung des Gewebes entlang dieser Linie führt.

Um eine Sollbruchlinie in ein Gewebe einzubringen, sind insbesondere Lösungen bekannt, bei denen in das Gewebe entlang der gewünschten Sollbruchlinie ein schwächerer Faden eingewebt wird oder das Gewebe zerschnitten und mit einem schwächeren Faden wieder zusammengenäht wird.

Eine solche gewebte Sollbruchlinie ist z.B. in der DE 199 47 585 für ein Gurtband gezeigt, in welchem ein Airbag untergebracht ist. In der EP 1 010 591 ist eine Airbaghülle entlang ihrer Sollbruchlinie zusammengenäht, wobei die Wahl der Stiche und die Stärke des Fadens für den Aufreißwiderstand entscheidend sind. In der US 5;676, 394 wird in der Beschreibung des Standes der Technik eine Lösung aufgezeigt, bei der der Airbag durch eine ohnehin vorhandene Naht im Bezugsstoff der Rücklehne eines Sitzes tritt. Das Aufreißen einer solchen Naht wird als unzuverlässig kritisiert. Alternativ wird vorgeschlagen, in den Sitz eine Airbagabdeckung aus Gummi oder Plastik einzubringen, die mit dem Bezugsstoff vernäht und die mit einer unsichtbaren Schwächelinie versehen ist. D.h. bei Aktivierung des Airbags wird nicht die Naht, sondern die Schwächelinie im Gummi-., bzw. Plastteil zerstört. D.h. man ersetzt die Sollbruchlinie im Bezugsstoff durch eine Sollbruchlinie in einem homogenen Material wie Gummi oder Plaste, was darauf hinweist, dass man einer Sollbruchlinie im Bezugsstoff, entsprechend dem Stand der Technik hergestellt, nicht die geforderte Qualität zuerkennt.

Das Einweben von schwächeren Fäden entlang der Sollbruchlinie hat außerdem den Nachteil, dass der Gewebezuschnitt nicht unter dem Gesichtspunkt des geringsten Verschnittes erfolgen kann, sondern der Gewebezuschnitt muss jeweils genau zu den schwächeren Fäden ausgerichtet werden, damit die Sollbruchlinie innerhalb des Gewebezuschnittes an der richtigen Stelle liegt. Auch das Schaffen einer Sollbruchstelle durch Auftrennen und wieder vernähen bedeutet einen erhöhten Aufwand. Das Einbringen einer Sollbruchlinie in ein Gewebe nach Herstellung des fertigen Schichtaufbaus Träger - Schaumstoff - Gewebe oder Träger - Gewebe oder Schaumstoff - Gewebe ist praktisch nicht machbar.

Der Erfindung liegt die Aufgabe zugrunde, ein Verfahren unter Verwendung eines Lasers zu schaffen, mit dem eine Sollbruchlinie reproduzierbarer und definierter Aufreißkraft in ein flächenhaftes Gebilde eingebracht werden kann, bei dem wenigstens eine Schicht aus einem inhomogenen Material besteht.

Diese Aufgabe wird erfindungsgemäß mit den Merkmalen des Anspruches 1 gelöst. Vorteilhafte Ausführungen sind in den Unteransprüchen ausgeführt.

Grundsätzlich ist das erfindungsgemäße Verfahren geeignet, um eine Sollbruchlinie in jegliche Materialien einzubringen, in die eine Sollbruchlinie mittels Laser gemäß den im Stand der Technik gewürdigten Verfahren einbringbar ist. Seine besonderen Vorteile entfaltet das Verfahren jedoch erst in Verbindung mit einer textilen Fläche oder einem anderen inhomogenen Material. Unter einer textilen Fläche sollen solche Materialien verstanden werden, bei denen natürliche und/oder künstliche Fasern zueinander geordnet (gewebt, gewirkt, gestrickt) oder ungeordnet (verfilzt) liegend eine Schicht bilden. Zwischen den Fasern befindet sich in der Regel Luft. Als Beispiele für textile Flächen lassen sich beispielsweise Gewebe, Gewirke, Gestricke aus natürlichen oder künstlichen Fasern oder Fäden sowie Vlies und Filz nennen.
Unter inhomogenen Materialien sollen auch z.B. Schaumstoffe und poröse Keramik verstanden werden.

Die Erfindung soll nachfolgend anhand von Ausführungsbeispielen näher erläutert werden.
Hierzu zeigen:
- Fig. 1: Schnittbild eines Gewebes 1 mit darauf senkrecht gerichtetem Laserstrahlenbündel 4
- Fig.2: Schnittbild eines Gewebes 1 mit darauf schräg gerichtetem Laserstrahlenbündel 4

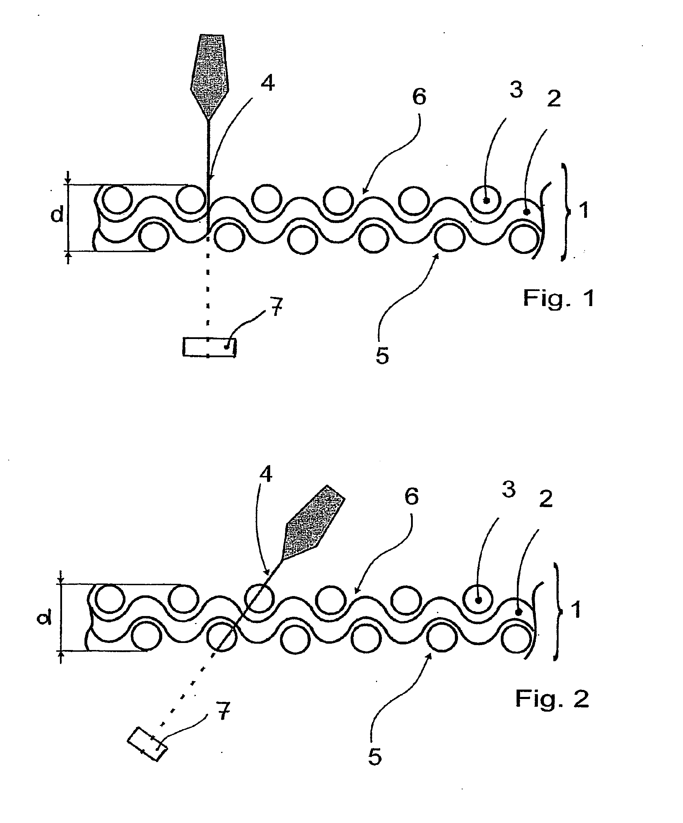

In einem ersten Ausführungsbeispiel soll ein Gewebe 1 bestehend aus natürlichen Fasern bearbeitet werden. Hierbei kann es sich um den Bezugsstoff für einen Sitz oder die Dekorschicht für eine Tür-Innenverkleidung handeln. Fig. 1 zeigt ein Schnittbild durch ein solches Gewebe 1 entlang eines Querfadens 2. Eine Vielzahl von Fasern bilden jeweils gebündelt einen Faden. Eine Vielzahl von nebeneinander angeordneten Längsfäden 3 sind mit einer Vielzahl von nebeneinander liegenden Querfäden 2 verwebt. Es ist an Hand der Darstellung, bei der die Abstände der Fäden zueinander übertrieben dargestellt wurden, gut erkennbar, dass ein auf das Gewebe 1 auftreffendes Laserstrahlenbündel 4, hier als Einzelstrahl dargestellt, das Gewebe 1 durchdringen kann, ohne dabei auf einen Faden zu treffen. An einem anderen Ort könnte das Laserstrahlenbündel 4 als anderes Extrem jeweils zwei übereinander liegende Fäden mittig durchdringen. D.h., obwohl das Gewebe 1 eine im Wesentlichen konstante Dicke d aufweist, kann die Menge des notwendigen Materialabtrages von Null bis zu einem maximalen Wert schwanken. Es liegt auf der Hand, dass der Materialabtrag, insbesondere wenn dieser von einer Seite des Gewebes 1 (Dekorseite 5) her nicht sichtbar sein soll, geregelt stattfinden muss, damit die Bearbeitungslaserstrahlung genau solang auf das Material einwirkt, bis ein Sackloch der gewünschten Restwandstärke entstanden ist. Die Restwandstärke kann hier allerdings im Unterschied zur sonst üblichen Bedeutung im Stand der Technik nicht als verbleibender Materialrest direkt an der Dekorseite 5 der Materialschicht verstanden werden, sondern dieser Materialrest kann in jeder Tiefe innerhalb der Materialdicke d des Gewebes 1 verbleiben. Unter gewünschter Restwandstärke soll im Sinne der Erfindung auch nicht zwingend eine bestimmte Wandstärke verstanden werden, sondern vielmehr eine bestimmte Materialmenge, die eine Strahlungsmenge transmittiert, die auf einen Detektor auftreffend ein Schwellwertsignal generiert. So kann die Restwandstärke tatsächlich schwanken, je nachdem wie dicht z.B. die einen Faden bildenden Fasern zueinander liegen.

Wie aus dem Stand der Technik durch die DE 196 36 429 C1 bekannt, kann der Abtrag des Materials und damit die verbleibende Restwandstärke für ein Sackloch grundsätzlich dadurch geregelt erfolgen, dass mittels eines Sensors die durch den Materialrest (Restwand) transmittierende Strahlung des Bearbeitungslasers erfasst wird. Die auftreffende Strahlungsmenge erzeugt ein Sensorsignal. Sobald dieses Sensorsignal einen vorgegebenen Schwellwert überschreitet, wird die Laserstrahlung abgeschaltet. Die Zeitspanne vom Generieren des Schwellwertsignals bis zum Abschalten der Laserstrahlung soll nachfolgend als Reaktionszeit verstanden werden. Dieses bekannte Verfahren setzt voraus, dass die Materialschicht entlang der gewünschten Sollbruchlinie überall eine Wandstärke aufweist, die größer/gleich der gewünschten Restwandstärke ist. Dies ist jedoch für ein Gewebe 1, wie erläutert, nicht der Fall.

Der Erfindung liegt die Idee zugrunde, ein solches Verfahren durch zusätzliche Verfahrensschritte so zu verbessern, dass es auch dann erfolgreich angewendet werden kann, wenn die Wandstärke entlang der gewünschten Sollbruchlinie die gewünschte Restwandstärke örtlich bis hin zu Null unterschreiten kann.
Gleich dem aus dem Stand der Technik bekannten Verfahren zum Einbringen einer Sollbruchlinie, wird in einem ersten Verfahrensschritt das flächenhafte Gebilde, in welches eine Sollbruchlinie mittels Laser eingebracht werden soll, hier ein Gewebe 1, so in den Strahlengang eines Bearbeitungslasers gebracht, dass ein vom Bearbeitungslaser emittierendes Laserstrahlenbündel 4 senkrecht auf die der Dekorseite 5 gegenüberliegende Bearbeitungsseite 6 des Gewebes 1 trifft. Auf der Dekorseite 5 ist ein Detektor 7 so angeordnet, dass ein durch die Stoffschicht transmittierender Strahlungsanteil des Laserstrahlenbündels 4 auf den Detektor 7 auftrifft. Die Stoffschicht wird nun so im Strahlengang positioniert, dass ein Punkt der Oberfläche im Strahlengang liegt, um den ein erstes Sackloch erzeugt werden soll. Die Laserleistung wird jetzt im Unterschied zu allen bekannten derartigen Verfahren allmählich von Null bis maximal auf 100% ihres Sollwertes hochgefahren. Allmählich soll im Sinne der Erfindung heißen, dass die Zeitspanne bis zur Erreichung des 100%igen Sollwertes größer der Reaktionszeit des Sensors ist. Empfängt der Detektor 7 bereits während des Hochfahrens transmittierte Strahlungsanteile, die ein Signal größer einem vorgegebenen und mit einer gewünschten Restwandstärke korrelierenden Schwellwert generieren, dann wird der Laser sofort abgeschalten. Dies passiert dann, wenn die Stoffschicht an dieser Stelle über ihre Dicke eine Materialmenge aufweist, deren Wandstärke kleiner der gewünschten Restwandstärke ist. Es kommt in diesem Fall zu keinem Materialabtrag, da das Material hier bereits ausreichend schwach ist. Eine solche Stelle, an der kein Material bzw. eine Materialmenge mit einer Wandstärke kleiner der gewünschten Restwandstärke detektiert wurde, soll im Weiteren als Pseudoloch verstanden werden.
Unabhängig davon, ob die Bearbeitungslaserstrahlung an oder aus geschaltet ist, wird das Gewebe 1 mit einer konstanten Geschwindigkeit im Bereich von 10-80 mm/s so bewegt, dass es entlang der gewünschten Sollbruchlinie durch den Strahlengang geführt wird. Es ist dem Fachmann klar, dass zur Erzeugung der erforderlichen Relativbewegung ebenso der Bearbeitungslaser gegenüber dem Gewebe 1 bewegt werden kann oder die Relativbewegung während des Laserns, d.h. während der Erzeugung eines Sackloches gestoppt werden könnte.
Sobald der nächste Punkt, um den ein Sackloch erzeugt werden soll, im Strahlengang liegt, bei konstanter Geschwindigkeit und konstantem Lochabstand ist dies nach einer festen Zeit jeweils gegeben, wird die Laserleistung erneut hochgefahren. Beispielsweise davon ausgehend, dass an dieser Stelle eine größere Materialmenge vorhanden ist, die eine Transmission von Strahlungsanteilen nicht oder nicht in der ausreichenden Menge zulässt, beginnt jetzt der Materialabtrag, bis in bekannter Weise die Restwandstärke so gering ist, dass die dann transmittierenden Strahlungsanteile am Detektor 7 ein Signal verursachen, welches oberhalb des vorgegebenen Schwellwertes liegt und der Laser abgeschalten wird.
Durch das verhältnismäßig langsame Hochfahren der Strahlungsleistung wird zum Einen ein Übersteuern des Detektors 7 verhindert und zum Anderen vermieden, dass ein Materialdurchbruch an Stellen, die dünner als die gewünschte Restwandstärke sind, erfolgt. Es kann sowohl mit gepulster als auch mit kontinuierlicher Laserleistung gearbeitet werden. Die Sollleistung des Lasers hängt im Wesentlichen von den Materialeigenschaften des Gewebes 1 ab. Sehr gut geeignet ist ein 10 Watt CO₂₋Laser. Wie bei derartigen Verfahren üblich, ist es von Vorteil, durch eine geeignete Belüftung und Absaugung die Verbrennungsrückstände zu beseitigen.
Die Wahl der Lochabstände wird im Wesentlichen in Abhängigkeit von der Reißfestigkeit des Fasermaterials, der Fasermenge pro Faden, der Webdichte und des gewünschten Aufreißwiderstandes der Sollbruchlinie ausgewählt. Dabei wird man den optimalen Lochabstand am schnellsten durch Versuche ermitteln. Er kann über die Länge der Sollbruchlinie konstant sein, periodisch wiederkehrend unterschiedliche Werte annehmen, oder aber abschnittsweise unterschiedlich groß sein bzw. sich kontinuierlich ändern, um z.B. den Aufreißwiderstand zu einem am Ende der Sollbruchlinie ausgebildeten Scharnier hin zu erhöhen. Auch könnten die Lochabstände grundsätzlich nach Detektion eines Pseudoloches kleiner gewählt werden, um die Wahrscheinlichkeit zu erhöhen, im nächsten Arbeitsschritt tatsächlich einen Faden zu treffen.
Um sicher jeden Faden entlang der gewünschten Sollbruchlinie zu schwächen, sollte der Lochabstand nicht größer als der Fadendurchmesser sein. Eine nahezu gleichmäßige Schwächung der betroffenen Fäden erreicht man, wenn man den Lochabstand gleich dem hälftigen Fadendurchmesser wählt. Selbst wenn die Fadenabstände über die gewünschte Sollbruchlinie schwanken, werden die betroffenen Fäden entweder einmal mittig oder zweimal außermittig perforiert.

In einem zweiten Ausführungsbeispiel soll ebenfalls ein Gewebe 1 mit einer Struktur, wie in Fig. 1 dargestellt, bearbeitet werden. Die einzelnen Fäden sind hier allerdings Kunststofffasern mit einer besonders hohen Reißfestigkeit. Die Materialschwächung, wie sie mit der im ersten Ausführungsbeispiel beschriebenen Variante des erfindungsgemäßen Verfahrens beschrieben wurde, ist hier nicht ausreichend, um den gewünschten Aufreißwiderstand einzustellen. Um einen größeren Materialabtrag über die Sollbruchlinie zu erreichen, soll die Laserstrahlung hier nicht senkrecht auf die Oberfläche des Gewebes 1 gerichtet werden, sondern unter einem Einfallswinkel kleiner 90°, vorzugsweise zwischen 70° und 30° zur Oberfläche des Gewebes 1, damit der Weg durch das Gewebe1 verlängert wird. Außerdem wird dadurch die Wahrscheinlichkeit verringert, dass im Strahlengang eine nur zu geringe Materialmenge vorhanden ist, bei der kein Materialabtrag erfolgt. Der Detektor 7 ist dann entsprechend versetzt anzuordnen, damit er die transmittierenden Strahlungsanteile detektieren kann.

In einem dritten Ausführungsbeispiel soll das Verfahren auf eine hinterschäumte textile Fläche angewendet werden. Hier wird in einem Verfahrensschritt mittels der Laserstrahlung erst die Schaumstoffschicht nahezu vollständig über die Länge der Sollbruchlinie durchtrennt (Vorschnitt) und anschließend in einem weiteren Verfahrensschritt analog den bereits beschriebenen Ausführungsbeispielen die textile Fläche bearbeitet. Während der Erzeugung des Vorschnittes wird der Detektor 7 abgeschalten bzw. auf einen geringeren Empfindlichkeitsbereich umgeschalten (desensibilisiert) um eine Übersteuerung zu vermeiden. Vorteilhafterweise kann die textile hinterschäumte Fläche auf einer leicht konvexen Oberfläche aufgespannt sein. Dadurch kommt es zu einem Auseinanderklaffen der Schaumstoffschicht entlang der Trennlinie und ein weiteres Verbrennen oder Schmelzen des Schaumstoffes während der Erzeugung der Sacklöcher in der textilen Fläche kann besser vermieden werden.

Das Verfahren kann ebenso auf eine bereits komplett montierte Airbagabdeckung angewendet werden, bestehend aus einer festen Trägerschicht, einer Schaumstoffschicht und einer textilen Fläche als Dekorschicht. Dabei kann, wie im voran beschriebenen Ausführungsbeispiel, das Verfahren zweistufig durchgeführt werden, in dem erst ein Vorschnitt erzeugt wird und anschließend aus dem Vorschnitt heraus perforiert wird, oder aber die Perforation der Sacklöcher erfolgt durch alle Schichten, wie eine weitere Variante des erfindungsgemäßen Verfahrens als viertes Ausführungsbeispiel beschrieben werden soll. Die Laserstrahlung wird auf die Bearbeitungsseite 6 der Airbagabdeckung gerichtet und trifft jetzt zuerst auf die Trägerschicht. Zur Bearbeitung der Trägerschicht wird gegenüber dem ersten Ausführungsbeispiel ein Laser deutlich höherer Leistung benötigt. Optimal ist ein 1500 W- CO2 Laser. Beginnend mit der vollen oder nahezu vollen Leistung wird zuerst ein Durchgangsloch in der Trägerschicht erzeugt, wobei kurz vor bzw. unmittelbar am Übergang der Trägerschicht zur Schaumstoffschicht die Leistung deutlich zurückgenommen wird, auf kleiner 30%. Zum Ende der Schaumstoffschicht hin wird die Strahlungsleistung bis auf Null zurückgefahren, damit nicht bereits eine durch einen Schaumstoffrest transmittierende Strahlung das Schwellwertsignal generiert und dann nach vollständiger Durchdringung der Schaumstoffschicht, wie im ersten Ausführungsbeispiel ausführlich beschrieben, wieder hochgefahren.

Grundsätzlich ist das erfindungsgemäße Verfahren auch vorteilhaft anwendbar, um eine Stoffschicht durch eine Reihe von Mikroperforationen zu schwächen. Der Schwellwert, bei welchem der Laser abgeschalten wird, ist dann so zu wählen, dass bereits ein kleinster Strahlungsanteil, der durch den Durchbruch hindurch tritt, das Abschalten des Lasers bewirkt. Insbesondere für textile Flächen mit einer "offenen" Struktur auf der Dekorseite 5, die z.B. durch Beflocken, Aufrauen und Aufschlingen entsteht (Samt, Velour, Malimo, Frottee) ist diese Verfahrensvariante geeignet. Die den Aufreißwiderstand bestimmenden Strukturen werden dabei vollständig durchdrungen, wobei die auf der Dekorseite 5 entstehenden Durchbrüche aufgrund der offenen Struktur nicht sichtbar sind.

Es ist von Vorteil, wenn das Bearbeitungslaserstrahlenbündel mit einer Strahlformungsoptik großer bildseitiger Apertur auf die Oberfläche der Dekorseite 5 fokussiert ist. Die Schwächung erfolgt damit seitens der Bearbeitungsseite 6 über einen größeren Strahlungsquerschnitt, der sich zur Dekorseite 5 hin verringert. Die Bearbeitungslaserstrahlung kann auch so auf das zu bearbeitende flächenhafte Gebilde gerichtet sein, dass dieses gezielt außerhalb des Tiefenschärfebereiches liegt, um das Material über einen relativ großen Strahlungsquerschnitt zu schwächen.

Auch kann es von Vorteil sein, wenn in den Strahlengang des Bearbeitungslasers eine Messstrahlung eingekoppelt wird, die anstelle der Bearbeitungslaserstrahlung vom Detektor 7 detektiert wird. Eine solche Lösung könnte dann von Interesse sein, wenn das inhomogene Material für die Bearbeitungslaserstrahlung nicht transparent ist.

## Patentansprüche

1. Verfahren zum Erzeugen einer Sollbruchlinie in ein einschichtiges flächenhaftes Gebilde mit einer Bearbeitungsseite (6) und einer Dekorseite (5), bestehend aus einem Material mit einer inhomogenen Materialdichteverteilung, wobei
- ein Laserstrahlenbündel (4) auf die Bearbeitungsseite (6) gerichtet wird, das durch Materialabtrag in seinem Strahlengang Löcher erzeugt, die seitens der Dekorseite (5) nicht sichtbar sind,
- das Laserstrahlenbündel (4) und das flächenhafte Gebilde eine Relativbewegung zueinander ausführen, so dass die Löcher in einer Reihe entlang der gewünschten Sollbruchlinie erzeugt werden,
- die Laserstrahlung für eine den nachfolgenden Lochabstand bestimmende Zeitdauer jeweils dann abgeschalten wird, wenn auf einen seitens der Dekorseite (5) angeordneten Detektor (7) eine Strahlungsmenge auftrifft, die ein Detektorsignal generiert, das größer einem vorgegebenen Schwellwertsignal ist, **dadurch gekennzeichnet, dass**
- vor Beginn der Erzeugung eines jeden Loches die Leistung der Laserstrahlung allmählich von Null bis auf ihren maximalen Sollwert hochgefahren wird, wobei
- die Laserstrahlung unmittelbar abgeschaltet wird, wenn vor Erreichen des maximalen Sollwertes ein Detektorsignal generiert wird, das größer dem vorgegebenen Schwellwert ist, was durch eine geringe oder keine Materialmenge des flächenhaften Gebildes im Strahlengang verursacht wird (Pseudoloch) und damit ein Abtrag der nur geringen Materialmenge sowie die Übersteuerung des Detektors (7) vermieden wird.

2. Verfahren zum Erzeugen einer Sollbruchlinie in ein mehrschichtiges flächenhaftes Gebilde mit einer Bearbeitungsseite (6) und einer Dekorseite (5), bei dem die die Dekorseite (5) bildende Schicht (letzte Schicht) aus einem inhomogenen Material besteht, wobei
- ein Laserstrahlenbündel (4) auf die Bearbeitungsseite (6) gerichtet wird, das durch Materialabtrag in seinem Strahlengang Löcher erzeugt, die seitens der Dekorseite (5) nicht sichtbar sind,
- das Laserstrahlenbündel (4) und das flächenhafte Gebilde eine Relativbewegung zueinander ausführen, so dass die Löcher in einer Reihe entlang der gewünschten Sollbruchlinie erzeugt werden,
- die Laserstrahlung für eine den nachfolgenden Lochabstand bestimmende Zeitdauer jeweils dann abgeschalten wird, wenn auf einen seitens der Dekorseite (5) angeordneten Detektor (7) eine Strahlungsmenge auftrifft, die ein Detektorsignal generiert, das größer einem vorgegebenen Schwellwertsignal ist, **dadurch gekennzeichnet, dass**
- vor Eindringung der Laserstrahlung in die letzte Schicht die Leistung der Laserstrahlung wenigstens soweit heruntergefahren wird, dass die noch emittierende Strahlungsmenge bei vollständiger Detektion ein Signal kleiner dem Schwellwert generieren würde, der Detektor (7) jetzt aktiviert wird und anschließend die Laserstrahlung wieder allmählich auf ihren maximalen Sollwert hochgefahren wird, wobei
- die Laserstrahlung unmittelbar abgeschaltet wird, wenn vor Erreichen des maximalen Sollwertes ein Detektorsignal generiert wird, das größer dem vorgegebenen Schwellwert ist, was durch eine geringe oder keine Materialmenge des flächenhaften Gebildes im Strahlengang verursacht wird (Pseudoloch) und damit ein Abtrag der nur geringen Materialmenge sowie die Übersteuerung des Detektors (7) vermieden wird.

3. Verfahren nach Anspruch 2, **dadurch gekennzeichnet,**
**dass** vor der Erzeugung der Reihe von Löchern ein Vorschnitt entlang der gewünschten Sollbruchlinie von Seiten der Bearbeitungsseite (6) bis maximal an die letzte Schicht eingebracht wird, wobei der Detektor (7) desensibilisiert oder deaktiviert wird, um ihn vor einer eventuellen Übersteuerung zu schützen.

4. Verfahren nach Anspruch 1, 2 oder 3, **dadurch gekennzeichnet,**
**dass** das Schwellwertsignal so ausgewählt wird, dass es bereits durch eine Strahlungsmenge generiert wird, die durch eine Restwand von Material des flächenhaften Gebildes transmittiert, so dass die Löcher als Sacklöcher ausgebildet werden.

5. Verfahren nach Anspruch 1, 2 oder 3, **dadurch gekennzeichnet,**
**dass** bei Bearbeitung eines inhomogenen Materials, welches eine textile Fläche mit offener Struktur auf der Dekorseite (5) ist, das Schweilwertsignal so ausgewählt wird, dass erst nach unmittelbarem Durchbruch der Dekorseite (5) eine Strahlungsmenge detektiert wird, die ein Signal größer dem Schwellwertsignal generiert, so dass die Löcher als Mikroperforationslöcher ausgebildet werden.

6. Verfahren nach Anspruch 4 oder 5, **dadurch gekennzeichnet,**
**dass** die Laserstrahlung unter einem Winkel kleiner 90° gegenüber der Richtung der Sollbruchlinie auf die Bearbeitungsseite (6) auftrifft, um die Länge des Strahlengangs im flächenhaften Gebilde zu erhöhen, was bei gleichbleibenden Lochabständen zu einem größeren Materialabtrag führt oder höhere Lochabstände erlaubt.

7. Verfahren nach einem der vorhergehenden Ansprüche, **dadurch gekennzeichnet, dass** die Lochabstände zwischen einem Pseudoloch und einem darauffolgenden Sack- oder Mikroperforationsloch kleiner gewählt werden als die anderen Lochabstände.

8. Verfahren nach einem der vorhergehenden Ansprüche, **dadurch gekennzeichnet, dass** das Laserstrahlenbündel (4) so geformt auf die Bearbeitungsseite (6) auftrifft, dass sein Querschnitt zur Dekorseite (5) hin abnimmt.

9. Verfahren nach einem der vorhergehenden Ansprüche, **dadurch gekennzeichnet, dass** bei Bearbeitung eines inhomogenen Materials, das ein Gewebe (1) ist, das aus Längsfäden (3) und Querfäden (2) besteht, der Lochabstand kleiner dem Fadendurchmesser gewählt wird.

10. Verfahren nach Anspruch 9, **dadurch gekennzeichnet,**
**dass** der Lochabstand gleich dem halben Fadendurchmesser gewählt wird, so dass jeder Faden durch zwei Löcher geschwächt wird, sofern das Loch nicht über den Fadendurchmesser erzeugt wird.

## Claims

1. Method of producing a predetermined breaking line in a single-layer laminar structure with a processing face (6) and a decorative face (5), made from a material with an inhomogeneous material density distribution, wherein
- a laser beam (4) is directed onto the processing face (6) and in its beam path it produces holes by material removal which are not visible from the decorative face (5),
- the laser beam (4) and the laminar structure carry out a relative movement with respect to one another so that the holes are produced in a row along the desired predetermined breaking line,
- the laser radiation is then switched off in each case for a time period which determines the subsequent spacing of the holes when an amount of radiation which generates a detector signal greater than a predetermined threshold signal impinges on a detector (7) disposed on the decorative face,
**characterised in that**
- before the start of production of each hole the power of the laser radiation is gradually raised from zero to its maximum desired value, wherein
- the laser radiation is switched off immediately when before the maximum desired value is reached a detector signal is generated which is greater than the predetermined threshold value, and this is caused by a small or non-existent amount of material of the laminar structure in the beam path (pseudo-hole) and thus removal of the only small amount of material as well as overriding of the detector (7) is avoided.

2. Method of producing a predetermined breaking line in a single-layer laminar structure with a processing face (6) and a decorative face (5), in which the layer forming the decorative face (5) (last layer) are made from an inhomogeneous material, wherein
- a laser beam (4) is directed onto the processing face (6) and in its beam path it produces holes by material removal which are not visible from the decorative face (5),
- the laser beam (4) and the laminar structure carry out a relative movement with respect to one another so that the holes are produced in a row along the desired predetermined breaking line,
- the laser radiation is then switched off in each case for a time period which determines the subsequent spacing of the holes when an amount of radiation which generates a detector signal greater than a predetermined threshold signal impinges on a detector (7) disposed on the decorative face,
**characterised in that**
- before penetration of the laser radiation into the last layer the power of the laser radiation is reduced at least so far that the amount of radiation which is still emitting when completely detected would generate a signal smaller than the threshold value, the detector (7) is now activated and then the laser radiation is again raised gradually to its maximum desired value, wherein
- the laser radiation is switched off immediately when before the maximum desired value is reached a detector signal is generated which is greater than the predetermined threshold value, and this is caused by a small or non-existent amount of material of the laminar structure in the beam path (pseudo-hole) and thus removal of the only small amount of material as well as overriding of the detector (7) is avoided.

3. Method as claimed in Claim 2, **characterised in that** before the row of holes is produced a preliminary cut is introduced along the desired predetermined breaking line from the processing face (6) to at most the last layer, wherein the detector (7) is desensitised or deactivated in order to protect it from any override.

4. Method as claimed in Claim 1, 2 or 3, **characterised in that** the threshold signal is chosen so that it is already generated by an amount of radiation which is transmitted through a residual wall of material of the laminar structure so that the holes are constructed as blind holes.

5. Method as claimed in Claim 1, 2 or 3, **characterised in that** when an inhomogeneous material is processed which is a textile surface with an open structure on the decorative face (5) the threshold signal is chosen so that only after immediate passage through the decorative face (5) an amount of radiation is detected which generates a signal greater than the threshold value so that the holes are constructed as microperforation holes.

6. Method as claimed in Claim 4 or 5, **characterised in that** the laser radiation impinges on the processing face (6) at an angle smaller than 90° relative to the direction of the predetermined breaking line in order to increase the length of the beam path in the laminar structure which in the case of a constant spacing between the holes leads to a greater removal of material or greater spacing between the holes.

7. Method as claimed in any one of the preceding claims, **characterised in that** the hole spacing between a pseudo-hole and a following blind hole or microperforation hole is chosen to be smaller than the other hole spacings.

8. Method as claimed in any one of the preceding claims, **characterised in that** the laser beam (4) formed in this way impinges on the processing face (6) so that the beam cross-section decreases towards the decorative face (5).

9. Method as claimed in one of the preceding claims, **characterised in that** when processing an inhomogeneous material, which is textile fabric (1) which consists of longitudinal fibres (3) and transverse fibres (2), the hole spacing is selected to be smaller than the fibre diameter.

10. Method as claimed in Claim 9, **characterised in that** the hole spacing is selected to be equal to half the fibre diameter so that each fibre is weakened by two holes, provided that the hole is not produced above the fibre diameter.

## Revendications

1. Procédé pour former une ligne destinée à la rupture dans un produit plan monocouche avec un côté de façonnage (6) et un côté décoratif (5), constitué d'une matière avec une répartition de densité de matière non homogène, moyennant quoi
- un faisceau de rayon laser (4) est orienté vers le côté de façonnage (6), qui génère des trous sur la trajectoire du rayon par enlèvement de matière qui ne sont pas visibles du côté décoratif (5),
- le faisceau de rayon laser (4) et le produit plan effectuent un déplacement relatif l'un par rapport à l'autre de sorte que les trous sont formés sur une rangée le long de la ligne destinée à la rupture souhaitée,
- le rayonnement du laser pour une durée déterminant un écartement des trous suivant est interrompu à chaque fois qu'une quantité de rayonnement, qui génère un signal de détecteur qui est plus grand qu'un signal de valeur seuil prédéterminée, frappe un détecteur (7) placé du côté décoratif (5), **caractérisé en ce que**
- avant le début de la formation de chaque trou, la puissance du rayonnement du laser est augmentée progressivement de zéro jusqu'à sa valeur consigne maximale, moyennant quoi
- le rayonnement du laser est interrompu immédiatement lorsqu'un signal de détecteur, qui est plus grand que la valeur seuil prédéterminée, est formé avant que la valeur consigne maximale soit atteinte, ce qui est provoqué par une faible ou aucune quantité de matière du produit plan sur la trajectoire du rayon (pseudo-trou), et on évite ainsi un enlèvement de la faible quantité de matière seulement ainsi que la saturation du détecteur (7).

2. Procédé pour former une ligne destinée à la rupture dans un produit plan multicouche avec un côté de façonnage (6) et un côté décoratif (5), dans lequel la couche (dernière couche) formant le côté décoratif (5) est constitués d'une matière non homogène, moyennant quoi
- un faisceau de rayon laser (4) est orienté vers le côté de façonnage (6), qui génère des trous sur la trajectoire du rayon par enlèvement de matière qui ne sont pas visibles du côté décoratif (5),
- le faisceau de rayon laser (4) et le produit plan effectuent un déplacement relatif l'un par rapport à l'autre de sorte que les trous sont formés sur une rangée le long de la ligne destinée à la rupture souhaitée,
- le rayonnement du laser pour une durée déterminant un écartement des trous suivant est interrompu à chaque fois qu'une quantité de rayonnement, qui génère un signal de détecteur qui est plus grand qu'un signal de valeur seuil prédéterminée, frappe un détecteur (7) placé du côté décoratif (5), **caractérisé en ce que**
- avant la pénétration du rayonnement du laser dans la dernière couche, la puissance du rayonnement du laser est diminuée au moins jusqu'à ce que la quantité de rayonnement encore émissive avec une détection complète formerait un signal inférieur à la valeur seuil, le détecteur (7) est alors activé et ensuite, le rayonnement du laser est de nouveau augmenté progressivement jusqu'à sa valeur consigne maximale,
moyennant quoi
- le rayonnement du laser est interrompu immédiatement lorsqu'un signal de détecteur, qui est plus grand que la valeur seuil prédéterminée, est formé avant que la valeur consigne maximale soit atteinte, ce qui est provoqué par une faible ou aucune quantité de matière du produit plan sur la trajectoire du rayon (pseudo-trou), et on évite ainsi un enlèvement de la faible quantité de matière seulement ainsi que la saturation du détecteur (7).

3. Procédé selon la revendication 2, **caractérisé en ce que**
avant la formation de la rangée de trous, une découpe préparatoire est pratiquée le long de la ligne destinée à la rupture souhaitée depuis les côtés du côté de façonnage (6) jusqu'à la dernière couche, au maximum, le détecteur (7) étant désensibilisé ou désactivé pour le protéger contre une éventuelle saturation.

4. Procédé selon la revendication 1, 2 ou 3, **caractérisé en ce que**
le signal de valeur seuil est choisi de manière à être déjà formé par une quantité de rayonnement transmis à travers une paroi restante de matière du produit plan, de sorte que les trous sont formés comme des trous borgnes.

5. Procédé selon la revendication 1, 2 ou 3, **caractérisé en ce que**
lors de le façonnage d'une matière non homogène, qui est une surface textile avec une structure ouverte sur le côté décoratif (5), le signal de valeur seuil est choisi de telle manière qu'une quantité de rayonnement, qui génère un signal plus grand que le signal de valeur seuil, est détectée seulement après le percement immédiat du côté décoratif (5), de sorte que les trous sont formés comme des trous de micro-perforations.

6. Procédé selon la revendication 4 ou 5, **caractérisé en ce que**
le rayonnement du laser frappe le côté de façonnage (6) avec un angle inférieur à 90° par rapport à la direction de la ligne destinée à la rupture pour augmenter la longueur de la trajectoire du rayon dans le produit plan, ce qui entraîne un enlèvement de matière plus important avec des écartements des trous constants ou ce qui permet des écartements des trous plus grands.

7. Procédé selon l'une quelconque des revendications précédentes,
**caractérisé en ce que**
les écartements des trous entre un pseudo-trou et un trou borgne ou un trou de micro-perforation suivant sont choisis pour être plus petits que les autres écartements des trous.

8. Procédé selon l'une quelconque des revendications précédentes,
**caractérisé en ce que**
le faisceau de rayon laser (4) frappe le côté de façonnage (6) formé de telle manière que sa section transversale diminue en direction du côté décoratif (5).

9. Procédé selon l'une quelconque des revendications précédentes,
**caractérisé en ce que**
lors de le façonnage d'une matière non homogène qui est un tissu (1) qui est constitué de fils en long (3) et de fils en travers (2), l'écartement des trous est choisi pour être plus petit que le diamètre des fils.

10. Procédé selon la revendication 9, **caractérisé en ce que**
l'écartement des trous est choisi pour être égal au demi-diamètre des fils de sorte que chaque fil est affaibli par deux trous à condition que le trou ne soit pas formé sur le diamètre du fil.
